Europäisches Patentamt

European Patent Office

Office européen des brevets

(11) Veröffentlichungsnummer: **0 243 805**

**A2**

# (12) EUROPÄISCHE PATENTANMELDUNG

(21) Anmeldenummer: 87105631.3

(22) Anmeldetag: 15.04.87

(51) Int. Cl.³: **C 01 B 33/02**
**C 22 B 41/00**

(30) Priorität: 23.04.86 DE 3613778

(43) Veröffentlichungstag der Anmeldung:
04.11.87 Patentblatt 87/45

(84) Benannte Vertragsstaaten:
BE DE FR GB IT SE

(71) Anmelder: HELIOTRONIC Forschungs- und
Entwicklungsgesellschaft für Solarzellen-Grundstoffe
mbH
Johannes-Hess-Strasse 24
D-8263 Burghausen(DE)

(72) Erfinder: Holm, Claus, Dr., Dipl.-Chemiker
Ahornstrasse 8
D-8261 Stammham(DE)

(72) Erfinder: Sirtl, Erhard, Prof., Dr., Dipl.-Chemiker
Kiefernweg 11
D-8261 Marktl(DE)

(72) Erfinder: Dietl, Josef, Dr., Dipl.-Physiker
Am Bärenbach 17
D-8265 Neuötting(DE)

(72) Erfinder: Hölzlwimmer, Franz
Weinbergstrasse 28
D-8342 Gumpersdorf(DE)

(54) Verfahren zur Herstellung von Formkörpern aus Granulat auf der Basis von Silicium, Germanium oder Mischkristallen dieser Elemente.

(57) Es wird ein Verfahren zur Herstellung von Formkörpern aus Granulat auf der Basis von Silicium, Germanium oder Mischkristallen dieser Elemente angegeben. Das in einer bestimmten Raumform vorgelegte Granulat wird dabei Bedingungen unterworfen, die den Beginn und Fortgang einer chemischen Transportreaktion gestatten, die unter Transport von Silicium bzw. Germanium abläuft. Dadurch verwachsen die Granulatkörner miteinander und bilden schließlich einen festen, porösen Formkörper. Durch Variation des Ausgangsmaterials, des Transportmittels sowie ggf. durch Zusatz von Dotierstoffen lassen sich insbesondere die elektrischen Eigenschaften des Produktes beeinflussen.

EP 0 243 805 A2

HELIOTRONIC

Forschungs- und Entwicklungsgesellschaft für Solarzellen-
Grundstoffe mbH

München, den 07.04.1986
PAT/Dr.K/we

Ht 8404
=======

Verfahren zur Herstellung von Formkörpern aus Granulat auf der Basis von Silicium, Germanium oder Mischkristallen dieser Elemente

Die Erfindung betrifft ein Verfahren zur Herstellung von Formkörpern aus Granulat auf der Basis von Silicium, Germanium oder Mischkristallen dieser Elemente.

Zur Herstellung von Formkörpern aus Silicium- bzw. Germaniumgranulat ist es beispielsweise bekannt, die Granulatkörner durch Zusammensintern miteinander zu verbinden und dadurch schließlich ein die gewünschte Raumform aufweisendes verfestigtes Material zu erhalten. Eine andere Methode besteht darin, die Granulatkörner oberflächlich, z.B. mittels Elektronenstrahl, anzuschmelzen und sich dadurch an den Kontaktflächen verbinden und beim Abkühlen erneut verfestigen zu lassen. Bei diesen Verfahren, bei denen das Granulat auf Temperaturen im Bereich des Schmelzpunktes erhitzt werden muß, kann es durch Hilfstoffe, z.B. Tiegelmaterial oder Bindemittel zu Verunreinigungen kommen. Gemäß einem weiteren bekannten Verfahren wird Siliciumgranulat mit einem Silicium ätzenden Agens in Kontakt gebracht, wobei sich die Granulatkörner durch Reaktionsbindung aneinander zu einem Formkörper verfestigen.

Dabei bildet sich jedoch auf den einzelnen Körnern eine Oxidhaut aus, die das Material für Anwendungen, bei denen es auf einen geringen Sauerstoffgehalt ankommt, von Haus aus ungeeignet macht. Auch das nach einem anderen bekannten Verfahren, bei dem die Granulatkörner mit carbonisierbaren Substanzen gemischt und durch Temperaturbehandlung über Kohlenstoff zu einem Formkörper verbunden werden, erhaltene Material ist aufgrund seines Kohlenstoffgehaltes vielfach für Anwendungen, die hohe Reinheit erfordern, nicht geeignet. Bei manchen der genannten Verfahren ist der Einsatz von feinem Granulat, d.h. von Granulat mit einer mittleren Korngröße von weniger als 1 mm, wegen dessen problematischer Handhabung oft schwierig.

Aufgabe der Erfindung war es daher, ein Verfahren anzugeben, das auch die Verwendung von feinkörnigen Granulatfraktionen gestattet, und nach dem sich unter definierten Bedingungen Formkörper herstellen lassen, die auch höchsten Reinheitsanforderungen genügen.

Gelöst wird die Aufgabe durch ein Verfahren, welches dadurch gekennzeichnet ist, daß das jeweils ausgewählte Granulat in eine vorgesehene Raumform gebracht wird, daß zumindest innerhalb der von dem Granulat ausgefüllten Raumform Bedingungen eingestellt werden, die den Beginn und Fortgang einer chemischen, unter Transport von Silicium bzw. Germanium ablaufenden Transportreaktion gestatten und daß diese Bedingungen so lange aufrechterhalten werden, bis durch die Transportreaktion einander benachbarte Granulatkörner miteinander verwachsen und zu einem Formkörper der vorgesehenen Raumform verfestigt sind.

Bei dem erfindungsgemäßen Verfahren kann mit gutem Ergebnis Granulat bis zu einer Korngröße eingesetzt werden, bei der ein Sieb mit lichter Maschenweite von 10 mm gerade noch passiert wird. Ein besonderer Vorteil liegt jedoch darin, daß sich auch die schwierig handzuhabenden, feinkörnigen Fraktionen (welche typisch zu den Siebe mit lichten Maschenweiten im Bereich zwischen 1 und 0,03 mm gerade noch passierenden Fraktionen gehören) verwenden lassen.

Zweckmäßig wird ein Granulat ausgewählt, dessen Schüttdichte etwa 30 bis 90 %, vorzugsweise 40 bis 80 % der Dichte des massiven Materials entspricht. Beispielsweise beträgt im Falle von Silicium die Schüttdichte des sogenannten Feinstaubes (Korngröße entsprechend einer lichten Maschenweite von 0,1 bis 0,3 mm) typisch etwa 1,1 bis 1,5 g/cm³, d.h. ca. 47 bis 65 % der Dichte des massiven Siliciums. Diese Schüttdichtenbereiche gewährleisten in den meisten Fällen eine ausreichend dichte Anordnung der Granulatkörner, um einen mechanisch stabilen Formkörper zu erhalten.

Grundsätzlich kann zwar auch Granulat mit einem relativ hohen Verunreinigungspegel, d.h. sogar mit nur etwa 90 bis 95 Gew.-% Silicium- bzw. Germaniumanteil eingesetzt werden, sofern die Verunreinigungen die Transportreaktion
nicht stören. Da aber erfahrungsgemäß der Ablauf von Transportreaktionen
äußerst leicht durch die Gegenwart von Verunreinigungen beeinflußt werden
kann, wird vorteilhaft ein Ausgangsmaterial von mindestens 99 Gew.-%, bevorzugt mindestens 99,9 Gew.-% Reinheit eingesetzt. In der Regel wird das Ausgangsmaterial nach Maßgabe der für den Formkörper erforderlichen Reinheit ausgewählt; so lassen sich beispielsweise aus Siliciumgranulat mit 99,9999 Gew.-%
Reinheit Formkörper herstellen, die als Substrate bei der höchste Reinheit
fordernden Abscheidung von Reinstsilicium eingesetzt werden können. Auch die
Verwendung von Granulat auf der Basis von Silicium/Germanium-Mischkristallen
ist grundsätzlich nicht ausgeschlossen.


Die Raumform, in die das ausgewählte Granulat in einem anschließenden Verfahrensschritt gebracht wird, muß nicht unbedingt der des gewünschten Formkörpers
entsprechen, da das Endprodukt auch durch eine nachfolgende formgebende Behandlung, z.B. mittels abtragender Methoden, wie Drehen, Schleifen, Fräsen oder Sägen auf die gewünschte Form gebracht werden kann.

Günstig wird die Formgebung dadurch erreicht, daß das Granulat in entsprechende formgebende Elemente, z.B. Hohlformen, wie Rohre, Schalen, Hohlzylinder,
Hohlquader und dergleichen eingefüllt wird. Diese formgebenden Elemente können
dann für die Transportreaktion in einen Rezipienten eingebracht werden. Bevorzugt sind jedoch die formgebenden Elemente gleichzeitig zumindest teilweise Bestandteile des Rezipienten; sie dienen damit gleichzeitig zur Formgebung und
als Reaktionsbehältnis.


Vorteilhaft werden für die Hohlformen Wandmaterialien ausgewählt, die sich unter den eingestellten Reaktionsbedingungen und in Kontakt mit den Granulatkörnern weitgehend inert verhalten und formstabil sind. Solche Materialien sind
bevorzugt Quarz, insbesondere Quarzglas, aber auch Graphit oder oxidische Materialien, wie z.B. Aluminium-, oder Magnesiumoxid, Mullit oder andere andere
Mischoxide in massiver oder faseriger Form, z.B. auf Basis Aluminiumoxid/Siliciumoxid, Carbide, wie z.B. Siliciumcarbid oder Nitride, wie Siliciumnitrid.
Das vorzugsweise eingesetzte Quarzglas hat - neben seiner hohen chemischen
und thermischen Stabilität - den Vorteil, daß das vorgelegte

Granulat in die vorgesehene Raumform, z.B. als Rohr, Rund- oder Kantstab, Platte, Kugel oder Zylinder eingeschmolzen werden kann und somit in definierter Form in einem abgeschlossenen Volumen vorliegt.

Gegebenenfalls kann die Schüttdichte des in das jeweilige formgebende Element eingefüllten Granulates durch Verdichtungsmaßnahmen, wie z.B. Rütteln oder Ultraschallbehandlung weiter erhöht werden, z.B. wenn ein besonders kompaktes Endprodukt gewünscht wird oder ein zu locker gepacktes Ausgangsmaterial vorliegt.

Bevor die eigentliche Transportreaktion in Gang gesetzt wird, hat es sich bewährt, das vorgelegte Granulat durch Ausheizen von an der Oberfläche gebundenen Verunreinigungen, insbesondere oxidischer Art, zu befreien. Die bei an der Luft gelagertem Granulat unvermeidliche Oxidhaut kann nämlich insbesondere bei feinem, oberflächenreichem Material (Korngröße zumeist unter 1 mm) zu Störungen im Ablauf der Transportreaktion führen. Die Ausheiztemperatur richtet sich, je nach Ausgangsmaterial, nach der Temperatur, bei der die Oxide flüchtig zu werden beginnen. So wird bei Silicium das Ausheizen im allgemeinen bei 1.050 bis 1.400 °C (Abdampfen von Siliciummonoxid durch Reaktion von $SiO_2$ und elementarem Silicium), vorzugsweise 1.100 bis 1.200 °C im Vakuum, günstig bei 0,01 bar oder weniger, vorgenommen; die Zeitdauer beträgt typisch bis zu etwa 5 Stunden. Zweckmäßig werden unmittelbar im Anschluß daran die Bedingungen für die eigentliche Transportreaktion hergestellt, um eine erneute Kontamination des Granulates zu vermeiden.

Die Bedingungen, unter denen der chemische Gasphasentransport von Silicium oder Germanium stattfinden kann, sind grundsätzlich bekannt und können der Fachliteratur (vgl. H. Schäfer, Chemische Transportreaktionen, Verlag Chemie, Weinheim (1962)) entnommen werden. Dabei handelt es sich üblicherweise um Systeme, bei denen Quelle und Substrat eindeutig definiert sind. Überraschend wurde gefunden, daß sich auch innerhalb von Granulatschüttungen selbt über einen bedeutenden Längenbereich - es konnten bereits Rundstäbe mit ca. 3 cm Durchmesser und ca. 30 cm Länge hergestellt werden - geeignete Transportbedingungen aufrechterhalten lassen, obwohl in diesem Zusammenhang nicht mehr eindeutig von Quelle und Substrat die Rede sein kann.

Als Transportmittel kommen allgemein Stoffe in Frage, die die zu transportierende Substanz unter Bildung einer flüchtigen Verbindung aufzunehmen und an anderer Stelle wieder freizusetzen vermögen und dabei aber keine unzulässige Verunreinigung verursachen. Solche Stoffe stehen beispielsweise in Form von Wasserstoff, den Halogenen, den Chalkogenen oder auch Verbindungen, wie z.B. Halogeniden der dritten, fünften oder sechsten Hauptgruppe des Periodensystems, z.B. $BJ_3$ , $PJ_3$ oder $TeCl_4$ zur Verfügung. Mit besonderem Vorteil werden, insbesondere wenn in einem System gearbeitet wird, bei dem das Granulat in abgeschlossener Form, d.h. zumeist in einem abgeschmolzenen Quarzgefäß, vorliegt, diejenigen Stoffe eingesetzt, die sich in fester Form im Transportraum vorlegen lassen, wie etwa Jod, ggf. unter Zusatz von Dotierstoffen, sowie insbesondere Tellur. Auch der Einsatz von Stoffen, die unter den Reaktionsbedingungen Transportmittel freisetzen, wie z.B. $SiCl_4$, ist denkbar. Liegt das Granulat gemäß einer Weiterbildung des Erfindungsgedankens in einem offenen Reaktionsraum, z.B. in einem beidseitig offenen Rohr, vor, so wird zweckmäßig ein Trägergas, wie z.B. Argon oder Wasserstoff, mit dem vorgesehenen Transportmittel, z.B. gasförmiges Jod, Tellur oder Halogen- bzw. Chalkogenwasserstoff beaufschlagt und durch den Reaktionsraum geleitet.

Während die Halogene bei der Transportreaktion nicht im Sinne einer Dotierung wirken und somit vorteilhaft in den Fällen eingesetzt werden, bei denen ein undotiertes oder die Ausgangsdotierung aufweisendes Produkt angestrebt wird, kann durch den Einsatz von dotierenden Transportmitteln, wie z.B. dem bevorzugten Tellur oder Bortrijodid bzw. Jod unter Zusatz von elementarem Bor eine n- oder p-Dotierung bzw. auch Umdotierung des Ausgangsmaterials erreicht werden. Die Konzentration der Dotierstoffe liegt in der Regel bei $10^{15}$ bis $10^{18}$ Atomen/ $cm^3$ des jeweiligen Halbleitermaterials.

Während bei den bekannten Methoden des Gasphasentransportes, bei denen Substrat oder Quelle genau definiert sind, ein Temperaturgradient unerläßlich ist, wurde unerwartet gefunden, daß im Falle eines mit Granulat gefüllten Volumens sogar unter isothermen Bedingungen Transportreaktionen ablaufen können. Eine Erklärung liegt möglicherweise darin, daß aufgrund von Oberflächeneffekten (Spitzen, Kanten) zwischen den Granulatkörnern Unterschiede im chemischen Potential bestehen, die auch bei fehlendem (bzw. nicht mehr feststellbarem) Temperaturgradienten den Beginn und Fortgang einer Transportreaktion ermöglichen. Im allgemeinen wird man jedoch, schon im Interesse einer Festlegung der Transportrichtung und wegen der kürzeren Reaktionszeiten, innerhalb des Transportsystems einen vorteilhaft möglichst linearen Temperaturgradienten von maximal 5 °C/cm, vorteilhaft bis ca. 1 °C/cm einstellen, wobei erfahrungsgemäß der Reaktionsablauf um so gleichmäßiger ist, je genauer ein linearer Temperaturgradient eingehalten wird. Grundsätzlich sind zwar auch stärkere Gradienten möglich, bei welchen jedoch die Einhaltung eines kontrollierten Reaktionsablaufes, insbesondere über längere Strecken hinweg, immer schwieriger wird. Die Richtung des Temperaturgradienten wird zweckmäßig entsprechend der gewünschten Transportrichtung nach Maßgabe des Transportverhaltens des gewählten Transportmittels (von heiß nach kalt oder umgekehrt) eingestellt.

Die Wahl des absoluten Temperaturbereiches, innerhalb dessen der jeweils gewählte, genau einzuhaltende, relative Temperaturbereich (Temperaturgradient) eingestellt wird, ist demgegenüber weniger strengen Bedingungen unterworfen. Die obere Grenze liegt naturgemäß knapp unterhalb der Schmelztemperatur des jeweils eingesetzten Granulates, die Untergrenze bei etwa zwei Dritteln des in °C gemessenen Wertes der Schmelztemperatur. In den meisten Fällen wird man jedoch aus apparativen Gründen eine Temperatur von etwa 1.250 °C nicht überschreiten. Zweckmäßig wird die optimale Temperatur innerhalb der genannten Grenzen anhand von Vor-

versuchen ermittelt.

Für die Erzeugung der erforderlichen Temperaturen eignen sich solche Heizquellen, die die genaue Einstellung einer über die benötigte Strecke, innerhalb der die Transportreaktion ablaufen soll, in der beabsichtigten Weise ansteigenden, abfallenden oder konstanten Temperatur gestatten. Insbesondere geeignet sind dafür die handelsüblichen sogenannten Gradientenöfen, also widerstandsbeheizte Rohröfen von bis zu 200 cm Länge, mit einer Vielzahl hintereinanderliegender, getrennt regelbarer und genau einstellbarer Heizzonen. Auch andere, weniger aufwendige, vorteilhaft widerstandsbeheizte Öfen sind geeignet, sofern sie ein geeignetes Temperaturprofil besitzen. Solche Temperaturprofile lassen sich auf einfache Art mit Hilfe von Thermoelementen, z.B. auf Platin/Platin-Rhodium-Basis ermitteln. Oftmals lassen sich die Zonen konstanter oder linear bzw. annähernd linear abfallender oder ansteigender Temperatur in der Heizzone eines Ofens mit Hilfe von zusätzlich eingeführten Metallblöcken mit einem zur Aufnahme des mit Granulat gefüllten Reaktionsgefäßes geeigneten Hohlraum verlängern.

Im Gasraum wird zweckmäßig ein Druck des Transportmittels von typisch 0,001 bis 10 bar eingestellt. Erfahrungsgemäß sind beispielsweise im Falle von Tellur bereits Drücke im Bereich von 0,001 bis 0,5 bar ausreichend, während Jod zumeist höhere Drücke von etwa 0,1 bis 10 bar erfordert. Bei geschlossenen Systemen kann die zur Einstellung eines bestimmten Druckes erforderliche Menge des Transportmittels nach dem idealen Gasgesetz aus dem Volumen des vorgelegten Granulates, des Gasraumes und der Temperatur annähernd berechnet werden. Naturgemäß ändert sich dieser Anfangsdruck während der Transportreaktion, z.B. durch Verbindungsbildung oder Kondensationsphänomene; diese Änderung kann in vielen Fällen jedoch vernachlässigt werden. Bei offenen Systemen, bei denen beispielsweise ein mit dem Transportmittel beaufschlagtes Trägergas das in der gewünschten Raumform vorgelegte Granulat durchströmt, kann die gewählte Durchflußrate und der
Druck z.B. mit Hilfe von Durchflußmeßgeräten, wie Rotametern
und durch kontrollierte Einspeisung des Transportmittels in
den Gasstrom, z.B. mittels Verdampfer, eingestellt und überwacht werden.

Die Zeitdauer, während welcher die den Ablauf einer Transportreaktion gestattenden Bedingungen aufrechterhalten werden
müssen, wird durch viele Faktoren beeinflußt, beispielsweise
die durch das jeweils ausgewählte System erzielbare Transportrate, die Größe oder die mehr oder weniger stark poröse
Konsistenz des angestrebten Produktes. Zweckmäßig werden die
zur Erzielung des gewünschten Materials benötigten Reaktionszeiten anhand von Vorversuchen empirisch ermittelt. In vielen
Fällen haben sich Werte von etwa 2 bis 50 Stunden als ausreichend erwiesen. Diese Werte sind jedoch nicht im Sinne
einer Beschränkung, sondern lediglich als Richtwerte zu sehen.

Mithin ergibt sich für die erfindungsgemäße Herstellung von
Formkörpern beispielsweise die nachstehend beschriebene Vorgehensweise:

Zunächst wird das nach Maßgabe der geeigneten Materialparameter ausgewählte Granulat in ein die Ausbildung der vorgesehenen Raumform gestattendes Reaktionsgefäß eingefüllt.
Dies kann, z.B. wenn im geschlossenen System gearbeitet werden soll, ein einseitig abgeschmolzenes Rohr (Ampulle) aus
Quarz sein, in das ggf. zur Ausbildung einer ebenen Stirnfläche eine die Rundung abdeckende Quarzscheibe eingelegt
ist. Nach Erreichen des gewünschten Füllungsgrades, und ggf.
zusätzlicher Verdichtung kann beispielsweise durch Auflegen
einer weiteren Quarzscheibe die erhaltene Raumform des Granulates stabilisiert werden. Wenn das Verfahren ohne Ausheizen
des Systems fortgesetzt werden soll, kann bereits jetzt die
benötigte Menge des Transportmittels, ggf. unter Dotierstoffzusatz, zugegeben werden. Diese Menge kann in guter Näherung
nach dem idealen Gasgesetz bei Kenntnis des Volumens des Gasraumes, das sich aus der Differenz des nach dem Abschmelzen vorliegenden Gesamtvolumens des Reaktionsraumes und des Volumens des vorgelegten Granulates ergibt, der vorgesehenen Temperatur und des vorgesehenen Druckes ermittelt werden.

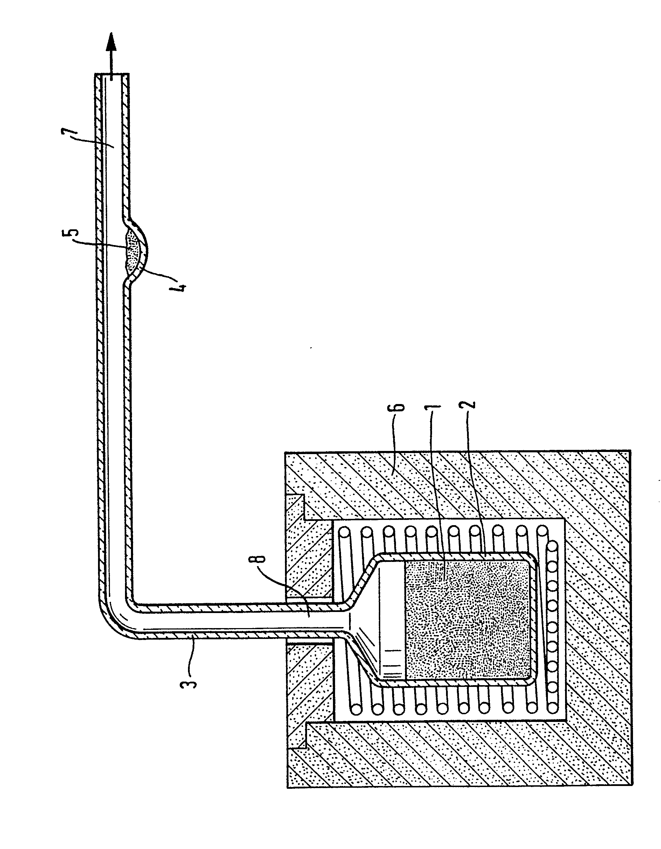

Für ein Verfahren im geschlossenen System, bei dem das vorgelegte Granulat vor dem eigentlichen Transportvorgang durch Ausheizen von Verunreinigungen, insbesondere oxidischer Art, befreit wird, eignet sich beispielsweise die in der Figur dargestellte Anordnung. Eine mit Granulat 1 gefüllte Ampulle 2 aus Quarzglas, bei der die Granulatfüllung ggf. an ihrem vorderen und hinteren Ende mit hier nicht dargestellten Quarzscheiben abgedeckt sein kann, geht an einem Ende in eine Zuleitung 3 über. Diese besitzt eine Ausnehmung oder Ausbuchtung 4, welche die vorgesehene Menge des Transportmittels 5, ggf. unter Dotierstoffzusatz, aufnehmen kann. Die Ausbuchtung 4 kann auch so geformt sein, daß eine externe Kühlung des Transportmittels 5, beispielsweise durch Eintauchen in eine Kältemischung, möglich ist, z.B. während des Ausheizens des Granulates in der Ampulle.

Zum Ausheizen wird an die Zuleitung 3 Vakuum angelegt, und, ggf. unter Kühlung des Transportmittels, die Ampulle 2 in den Rohrofen 6 eingeführt und dort für die vorgesehene Zeitdauer auf der gewünschten Temperatur gehalten. Danach wird in der Zone 7 die Zuleitung 3, beispielsweise durch ein Ventil oder durch Abschmelzen, geschlossen. Nun läßt sich das Transportmittel 5 aus der Ausbuchtung 4 in den Innenraum der Ampulle, den eigentlichen Transportraum, einbringen, z.B. durch Schütteln, und anschließend kann durch Abschmelzen in der Zone 8 der Reaktionsraum abgeschlossen werden.

Das solcherart vorbereitete Reaktionsgefäß, durch welches damit das insgesamt zur Verfügung stehende Transportvolumen sowie die vorgesehene Raumform des vorgelegten Granulates bestimmt ist, wird nun an die vorbestimmte Stelle in der ausgewählten, den erforderlichen Temperaturverlauf gewährleistenden Heizeinrichtung, z.B. einem Rohrofen, gebracht. Dabei kann dieser bereits auf der Arbeitstemperatur gehalten sein, oder aber von einer niedrigeren Temperatur, vorteilhaft der Raumtemperatur, auf die angestrebte Endtemperatur gebracht werden.

Mit dem Eintreten in diesen Temperaturbereich baut sich im
Transportvolumen allmählich der gewünschte Partialdruck des
Transportmittels auf und zwischen den einzelnen Granulatkörnern beginnen Transportreaktionen abzulaufen. Durch diesen
Materialtransport, bei dem einzelne Körner als Substrat und
Quelle wirken können, beginnen die Granulatpartikel miteinander zu verwachsen und verfestigen sich nach und nach zu
einem porösen, stabilen Formkörper.

Nach Ablauf der für die Erreichung der angestrebten Stabilität erforderlichen, beispielsweise durch Vorversuche ermittelten Reaktionszeit wird das Reaktionsgefäß, z.B. durch Entnahme aus der beheizten Zone, erkalten gelassen und damit die
Transportreaktion beendet. Es wird anschließend geöffnet und
der gebildete Formkörper kann entnommen werden.

Auch in einem offenen System kann, insbesondere was die Temperaturbedingungen und den zeitlichen Ablauf betrifft, grundsätzlich eine ähnliche Verfahrensweise beibehalten werden.
Ein geeignetes Reaktionsgefäß ist beispielsweise ähnlich der
in der Figur gezeigten, einseitig geschlossenen Ampulle aufgebaut, nur daß im Bereich der Bodenfläche    der Reaktionsraum in eine beispielsweise analog der Zuleitung 3 geformte Ableitung (Ausnehmungen für das Transportmittel sind
dabei nicht zwingend erforderlich) übergeht.

Während des ggf. vorgenommenen Ausheizens kann dann ein Inertgasstrom durch das Granulat geleitet werden, um die Verunreinigungen zu entfernen. Für die Transportreaktion kann
mittels dieses Gasstromes dann das gewählte Transportmittel
in den vom Granulat eingenommenen Raum eingeführt werden.

Das nach dem erfindungsgemäßen Verfahren erhältliche Material bietet vielerlei Anwendungs- und Weiterverarbeitungsmöglichkeiten, von denen nachstehend einige beispielhaft genannt werden. Abgesehen von mechanischer formgebender Behandlung durch beispielsweise Drehen, Schleifen, Sägen, kann auch z.B. mit Hilfe von flüssigem Material wie Silicium oder Germanium, oder mittels Gasphasenabscheidung von z.B. Silicium, Kohlenstoff oder dergleichen, oder durch Reaktion, z.B. Nitridierung, die Oberfläche beschichtet werden.

Aufgrund der vielfältigen Dotiermöglichkeiten können auch die elektrischen Eigenschaften des Materials gezielt beeinflußt werden. Beispielsweise kann, insbesondere wenn das zugleich als Dotierstoff und Transportmittel wirkende Tellur eingesetzt wird, ein bereits bei Raumtemperatur leitfähiges Siliciummaterial        hergestellt werden. Aus einem solchen Material gefertigte Dünnstäbe können beispielsweise als Trägerkörper bei der Abscheidung von Silicium durch Zersetzung von Trichlorsilan eingesetzt werden. Wegen der Leitfähigkeit des Materials bei Raumtemperatur kann in diesem Fall auf die bisher bei den üblicherweise eingesetzten Dünnstäben aus Reinstsilicium erforderliche Zusatzheizung zum Vorglühen bis zur Erreichung der einen ausreichenden Stromfluß ermöglichenden Temperatur verzichtet werden. Selbstverständlich kann das Material auch in anderer Form, z.B. als Platte oder Rohr, als Substrat bei der Siliciumabscheidung dienen. Wegen der äußerst hohen erzielbaren Reinheit des Substratmaterials kann zumeist der gesamte bei der Abscheidung erhaltene Formkörper weiter verwendet werden, ohne daß eine Abtrennung des ursprünglichen Substrates nötig ist.

Des weiteren kann nach dem erfindungsgemäßen Verfahren hergestelltes, bei Raumtemperatur leitfähiges Material auch als Werkstoff für die Herstellung von Heizstäben für widerstandsbeheizte Heizvorrichtungen eingesetzt werden. Dabei ist insbesondere an Öfen für Hochtemperaturprozesse bei der Herstellung elektronischer Bauelemente zu denken, bei denen die bisher üblichen metallischen Heizstäbe eine stetige Quelle von Verunreinigungen darstellen.

Eine andere Einsatzmöglichkeit besteht in der Verwendung als Sauerstoffgettermedium, das gegenüber den üblichen Materialien den Vorteil hoher Temperaturbeständigkeit mit einer großen verfügbaren Oberfläche verbindet. Diese läßt sich darüberhinaus bei Temperaturen oberhalb ca. 1.000 °C durch Abtragen des gebildeten Siliciumdioxids über das flüchtige Siliciummonoxid wieder regenerieren.

Das erfindungsgemäße Verfahren bietet damit die Möglichkeit, aus leicht verfügbaren Ausgangsstoffen ein vielseitig verwendbares Material bereitzustellen. Anhand der folgenden Beispiele wird das Herstellungsverfahren modellhaft näher erläutert.

Beispiel 1:

Eine gemäß der Figur gestaltete, einseitig geschlossene Quarzampulle wurde im als Reaktionsraum vorgesehenen, erweiterten Teil (Durchmesser ca. 8 cm) mit ca. 450 g Siliciumgranulat (undotiert, mittlere Korngröße ca. 100 bis 200 μm) bis zu einer Höhe von etwa 9 cm befüllt. Anschließend wurde in ein als Ausnehmung senkrecht an die Zuleitung angesetztes, von außen kühlbares Quarzrohr die zur Einstellung eines Arbeitsdruckes von ca. 3 bar erforderliche Menge Jod eingebracht.

Nun wurde, unter Kühlung des Jodvorrates mit flüssigem Stickstoff, der das Silicium enthaltende Teil der Anordnung auf 1200° C erhitzt und zugleich ein Vakuum von ca. $10^{-5}$ mbar angelegt. Diese Bedingungen wurden für ca. 5 Stunden aufrechterhalten, um eine ggf. auf den Granulatkörnern vorhandene Oxidhaut zu entfernen.

Danach wurde die Zuleitung zur Vakuumpumpe knapp hinter dem Jodvorrat abgeschmolzen und dadurch das System geschlossen. Nach dem Abkühlen auf Raumtemperatur wurde das Jod durch vorsichtiges Erwärmen in den Reaktionsraum sublimiert und schließlich die Zuleitung knapp hinter ihrem Ansatz an den Transportraum erneut abgeschmolzen.

Das solchermaßen vorbereitete, geschlossene Reaktionsgefäß wurde nun auf eine über das gesamte Volumen im Rahmen der Meßgenauigkeit konstante Temperatur von 1130° C gebracht, die bei der eingebrachten Menge Jod nach dem idealen Gasgesetz einen Joddruck von ca. 3 bar im System erwarten ließ. Unter diesen Bedingungen begannen zwischen den einzelnen Granulatkörnern Transportreaktionen abzulaufen, die nach und nach zu einer Verfestigung und zum Zusammenwachsen des gesamten Materials führten. Nach 5 Tagen wurde die Reaktion beendet.

Der aufgesägten Quarzampulle konnte ein stabiler Siliciumzylinder entnommen werden.

Beispiel 2:

In Anlehnung an die in Beispiel 1 beschriebene Verfahrensweise wurde eine gemäß der Fig. gestaltete Quarzampulle mit 450 g Siliciumgranulat (undotiert, Tellurgehalt unterhalb der Nachweisgrenze, mittlere Korngröße 100 bis 200 µm) befüllt. Als Transportmittel wurde Tellur in einer Menge eingesetzt, die bei einer Temperatur von 1100° C im Reaktionsraum einen Druck von 0,05 bar gewährleistete. Zur Aufnahme des Tellurs war eine Ausbuchtung in der Zuleitung zur Vakuumpumpe vorgesehen. Während des Ausheizens des vorgelegten Siliciumgranulates konnte auf eine Kühlung des Tellurs verzichtet werden.

Nach dem ersten Abschmelzen des Systems (knapp hinter dem Tellurvorrat) wurde das Tellur in den Reaktionsraum geschüttelt, und dieser danach an der in Beispiel 1 beschriebenen Stelle abgeschmolzen.

Die solcherart vorbereitete Ampulle wurde nun in einen widerstandsbeheizten Ofen eingeführt, dessen Temperatur über die gesamte Ampullenlänge (ca. 12 cm) hinweg auf eine im Rahmen der Meßgenauigkeit konstante Temperatur von 1100° C eingestellt wurde. Im Reaktionsraum war nach dem idealen Gasgesetz ein Tellurdruck von ca. 0,05 bar zu erwarten.

Unter diesen Bedingungen wurde das Reaktionsgefäß für ca. 24 Stunden belassen. Danach konnte ein stabiler zylindrischer Siliciumformkörper (Tellurgehalt ca. 6 ppma) entnommen werden. Das erhaltene Material zeigte bereits bei Raumtemperatur elektrische Leitfähigkeit.

Beispiel 3:

In der in Beispiel 2 beschriebenen Weise wurde eine mit Silicium gefüllte Ampulle vorbereitet. Lediglich die vorgelegte Tellurmenge wurde verringert, so daß bei einer mittleren Temperatur von 1100° C ein Druck von 0,025 bar im Reaktionsraum zu erwarten war.

Das Reaktionsgefäß wurde nun auf eine mittlere Temperatur von 1100° C gebracht, wobei über seine gesamte Länge ein Temperaturgradient von ca. 1° C/cm in Richtung des Bodens eingestellt war, und für ca. 50 Stunden auf diesen Bedingungen belassen.

Es ergab sich ein stabiler Zylinder aus miteinander verwachsenen Siliciumgranulatkörnern.

Beispiel 4:

In der in Beispiel 3 beschriebenen Weise wurde eine mit Silicium beschickte Ampulle vorbereitet, mit dem Unterschied, daß während der 5-stündigen Vakuumbehandlung das Reaktionsgefäß nicht auf 1200° C erhitzt, sondern auf Raumtemperatur gehalten wurde. Ansonsten wurde genau die in Beispiel 3 beschriebene Arbeitsweise beibehalten.

Es wurde ein Zylinder aus miteinander verwachsenen Siliciumgranulatkörnern erhalten, dessen mechanische Stabilität jedoch geringer war als die der gemäß den Beispielen 2 und 3 erhaltenen.

## Beispiel 5:

In Anlehnung an die in Beispiel 2 beschriebene Verfahrensweise wurde eine gemäß der Fig. gestaltete Quarzampulle (Volumen des Reaktionsraumes ca. 65 cm$^3$) mit 40 g Germaniumgranulat (undotiert, Tellurgehalt unterhalb der Nachweisgrenze, mittlere Korngröße ca. 100 bis 200 μm) befüllt. Zur Aufnahme des als Transportmittel vorgesehenen Tellurs, war eine Ausbuchtung in der Zuleitung zur Vakuumpumpe vorgesehen und mit einer Tellurmenge beschickt, die bei einer Temperatur von ca. 900° C im Reaktionsraum einen Arbeitsdruck von ca. 0,1 bar gewährleistete.

Zunächst wurde das System an eine Vakuumpumpe angeschlossen und für ca. 5 Stunden bei ca. 900° C und einem Vakuum von ca. 10$^{-5}$ mbar ausgeheizt. Dann wurde die Zuleitung zur Vakuumpumpe knapp hinter dem Tellurvorrat abgeschmolzen und das Tellur in den Reaktionsraum geschüttelt. Daraufhin wurde die Zuleitung kurz hinter ihrem Ansatz an den Reaktionsraum erneut abgeschmolzen.

Das solchermaßen vorbereitete Reaktionsgefäß wurde nun in einen widerstandsbeheizten Ofen eingeführt, so daß es sich über seine gesamte Länge hinweg in einer im Rahmen der Meßgenauigkeit auf ca. 900° C gehaltenen Zone konstanter Temperatur befand. Im Reaktionsraum war unter diesen Bedingungen nach dem idealen Gasgesetz ein Tellurdruck von ca. 0,1 bar zu erwarten.

Nach ca. 50 Stunden wurde die Ampulle entnommen und geöffnet. Es wurde ein stabiler, poröser Zylinder aus miteinander verwachsenen Germaniumpartikeln erhalten.

<u>P a t e n t a n s p r ü c h e</u>

1. Verfahren zur Herstellung von Formkörpern aus Granulat auf der
   Basis von Silicium, Germanium oder Mischkristallen dieser Elemente,
   d a d u r c h   g e k e n n z e i c h n e t, daß das jeweils ausgewählte Granulat in eine vorgesehene Raumform gebracht
   wird, daß zumindest innerhalb der von dem Granulat ausgefüllten Raumform Bedingungen eingestellt werden, die den
   Beginn und Fortgang einer chemischen, unter Transport
   von Silicium bzw. Germanium ablaufenden Transportreaktion
   gestatten und daß diese Bedingungen so lange aufrechterhalten werden, bis durch die Transportreaktion einander
   benachbarte Granulatkörner aneinander gebunden und zu
   einem Formkörper der vorgesehenen Raumform verfestigt
   sind.

2. Verfahren nach Anspruch 1,   d a d u r c h   g e k e n n -
   z e i c h n e t ,   daß vor dem Einstellen der Bedingungen der chemischen Transportreaktion das vorgelegte
   Granulat   von an der Oberfläche gebundenen Verunreinigungen befreit wird.

3. Verfahren nach den Ansprüchen 1 und 2,   d a d u r c h
   g e k e n n z e i c h n e t ,   daß während der Transportreaktion entlang der von dem Granulat ausgefüllten Raumform ein Temperaturgradient von bis zu 1 °C/cm eingestellt
   wird.

4. Verfahren nach den Ansprüchen 1 und 2, d a d u r c h   g e -
   k e n n z e i c h n e t , daß während der Transportreaktion entlang der von dem Granulat ausgefüllten Raumform
   eine konstante Temperatur eingestellt wird.

5. Verfahren nach einem oder mehreren der Ansprüche 1 bis 4 , dadurch gekennzeichnet , daß als die Transportreaktion bewirkende Substanz ein Feststoff eingesetzt wird.

6. Verfahren nach Anspruch 5 , dadurch gekenn - zeichnet , daß der Feststoff ausgewählt wird aus der Gruppe der Elemente Tellur und Jod.

7. Verfahren nach einem oder mehreren der Ansprüche 1 bis 6 , dadurch gekennzeichnet , daß die Transportreaktion in einem Gefäß aus Quarzglas durchge- führt wird.